Europäisches Patentamt

European Patent Office

Office européen des brevets

(11) Veröffentlichungsnummer: **0 487 992 A2**

# EUROPÄISCHE PATENTANMELDUNG

(21) Anmeldenummer: **91119499.1**

(51) Int. Cl.5: **G01N 21/45**

(22) Anmeldetag: **15.11.91**

(30) Priorität: **24.11.90 DE 4037431**

(43) Veröffentlichungstag der Anmeldung:
**03.06.92 Patentblatt 92/23**

(84) Benannte Vertragsstaaten:
**DE FR GB IT**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Brandenburg, Albrecht, Dr.**
**Alte Strasse 24**
**W-7802 Merzhausen(DE)**
Erfinder: **Hutter, Frank, Dr.**
**Randersackererstrasse 81**
**W-8700 Würzburg(DE)**
Erfinder: **Edelhäuser, Rainer**
**Weiherhofweg 8**
**W-7801 Au(DE)**

(54) **Optischer Sensor.**

(57) Ein optischer Sensor (1) weist eine integriert optische Anordnung zur Messung des optischen Absorptionskoeffizienten und der Brechzahl flüssiger oder gasförmiger Medien auf. Dieser optische Sensor kann als Interferometer ausgebildet sein, wobei in einem Wellenleiter-Zweig (4b) ein sensitiver Bereich (6) vorgesehen ist. In diesem sensitiven Bereich ist der Wellenleiterabschnitt des Wellenleiter-Zweiges (4b) mit einer sensitiven Schicht (8) aus einem Heteropolysiloxan überdeckt. Die übrigen Wellenleiterabschnitte sind durch eine dielektrische Schicht (7) abgedeckt.

Durch die sensitive Schicht (8) aus einem Heteropolysiloxan ist in vorteilhafterweise eine selektive Wechselwirkung mit dem nachzuweisenden Stoff ermöglicht. Unter dem Einfluß des nachzuweisenden Stoffes ändert die sensitive Schicht (8) ihre optischen Eigenschaften, die entsprechend ausgewertet werden. Der optische Sensor kann insbesondee auch dort eingesetzt werden, wo elektrische Sensoren problematisch sind, insbesondere in der Umgebung von starken elektromagnetischen Impulsen oder HF-Strahlung oder auch in explosionsgefährdeter Umgebung.

Fig.1

Die Erfindung bezieht sich auf einen optischen Sensor für flüssige oder gasförmige Medien mit einer integriert optischen Anordnung zur Messung des Absorptionskoeffizienten und der Brechzahl, wobei die Anordnung einen oder mehrere Wellenleiter sowie zumindest im Bereich eines Wellenleiters eine mit dem zu untersuchenden Stoff in Verbindung bringbare sensitive Schicht aufweist und insbesondere durch ein Interferometer gebildet ist.

Aus der Druckschritt "Springer-Proceedings in Physics, Vol. 44, optical Fiber Sensor, Springer-Verlag, Berlin, Heidelberg 1989, A Refractometer with a Fully Packaged Integrated Optical Sensor Head, Seiten 443 bis 447" ist ein mit einem Fabry-Perot-Interferometer arbeitender Sensor bekannt, bei dem ein Wellenleiter mit einer Siliziumoxidschicht abgedeckt ist, während der zweite Wellenleiter einen unbeschichteten Bereich als Meßbereich aufweist. Mit diesem Sensor ist ein Refraktometer gebildet, mit dem die Brechzahl einer Flüssigkeit gemessen werden kann.

Zur Untersuchung von Gasen ist dieses Refraktometer nicht geeignet.

Es sind zwar zur Gasmessung bereits Spektrometer bekannt, bei diesen ist jedoch unter anderem nachteilig, daß empfindliche mechanische Justagen vorder jeweiligen Messung erforderlich sind.

Weiterhin ist aus einer Druckschrift mit dem Titel "High Sensitivity Waveguid-Type Hydrogen Sensor" von K. Nishizawa, E. Sudo, M. Yoshida und T. Yamasaki (OFS'86, Tokyo) eine integriert-optische Anordnung mit Lichtwellenleitern bekannt, die bei einem Wellenleiterabschnitt eine Beschichtung aus Wolframoxid und Platin aufweist. Mit dieser Meßanordnung läßt sich Wasserstoff nachweisen und auch dessen Konzentration messen. Für andere Gase ist diese Meßanordnung nicht geeignet.

Die WO 86/07 149 zeigt einen optischen Sensor mit einer sensitiven Schicht, die hier insbesondere zur Identifizierung von Antigen-Antikörper-Kopplungen vorgesehen ist. Auch können Meßsubstanzen chemisorbiert oder chemisch gebunden werden.

Es ist dieser Druckschrift aber nicht entnehmbar, wie die sensitive Schicht für bestimmte Meßsubstanzen beschaffen sein muß.

Aufgabe der vorliegenden Erfindung ist es, einen Sensor zu schaffen, mit dem auf einfache Weise insbesondere selektiv die Konzentration eines bestimmten, vorgebbaren Stoffes meßbar ist. Der Sensor soll sich für Messungen von flüssigen oder gasförmigen Medien eignen.

Weiterhin soll der Sensor in explosionsgefährdeter Umgebung und/oder auch im Bereich starker elektromagnetischer Impulse oder HF-Strahlung einsetzbar sein und somit gegenüber äußeren Störeinflüssen unempfindlich sein. Schließlich soll auch eine kleine Bauform des Sensors möglich sein.

Zur Lösung dieser Aufgabe wird erfindungsgemäß insbesondere vorgeschlagen, daß die sensitive Schicht aus der Substanzklasse der Heteropolysiloxane (kurz: HPS) ist und zur Konzentrationsmessung von Komponenten in Gasen oder Flüssigkeiten vorgesehen ist und daß durch gezielte Auswahl der sensitiven Schicht aus dieser Substanzklasse jeweils eine bestimmte Stoffkomponente bestimmbar ist.

Bei der Substanzklasse der Heteropolysiloxane handelt es sich um organisch modifizierte Silikate. Die Modifizierung erfolgt in erster Linie durch Einbau funktioneller organischer Gruppen oder hydrolisierbarer und in einem Silikatnetzwerk kondensierbarer Metallverbindungen. Durch diese Modifizierung entstehen Oberflächenstellen (Adsorptionszentren), die eine idealerweise selektive Wechselwirkung mit dem nachzuweisenden Stoff ermöglichen.

Da ein evaneszenter Feldanteil des in dem einen Wellenleiter geführten Lichtes sich in die sensitive Schicht aus einem Heteropolysiloxan (HPS) erstreckt, wirkt sich eine Veränderung der optischen Eigenschatten der HPS-Schicht entsprechend auf das geführte Licht aus.

Aus der DE-OS 35 26 348 ist es bereits bekannt, HPS-Schichten in Verbindung mit einem Feldeffekttransistor oder einem Kondensator einzusetzen. Der praktische Anwendungsbereich dieser elektrischen Anordnungen ist jedoch eingeschränkt und auf Bereiche begrenzt, wo keine st arken elektromagnetischen Impulse oder HF-Strahlungen auftreten oder auch auf Bereiche außerhalb von explosionsgefährdeter Umgebung.

Bei Verwendung der HPS-Schicht in Verbindung mit einem Feldeffekttransistor ist die HPS-Schicht auf der Gate-Isolatorschicht auf gebracht und von der Gate-Elektrode ganz oder teilweise abgedeckt.

Ist die Gate-Elektrode vollständig aufgebracht, so muß ein Kompromiß eingegangen werden zwischen elektrischer Leiffähigkeit einerseits und Gasdurchlässigkeit andererseits. Beides gleichzeitig zu optimieren ist hierbei nicht möglich.

Bei einer strukturierten Gate-Elektrode (zum Beispiel: mäanderförmig) muß diese Struktur auf die sensitive HPS-Schicht aufgebracht werden. Dabei kann die HPS-Schicht mit Ätzmittel, Lösemittel oder dergleichen in Berührung kommen, was sich auf ihre Meßeigenschaften nachteilig auswirken kann. Außerdem ist die wirksame Fläche der sensitiven HPS-Schicht durch die bereichsweise darüber befindliche Gate-Elektrodenstruktur erheblich reduziert.

Bei Einsatz der HPS-Schicht in Verbindung mit einem kapazitiven Sensor überdeckt diese HPS-Schicht die auf einem Substrat befindlichen Elektroden. Das kapazitive Feld zwischen den Elektroden erstreckt sich auch über ihre HPS-Schicht hinaus in die Umgebung und liegt somit außerhalb der Meßschicht. Diese Meßanordnung ist daher für Störgrößen, welche die Messung verfälschen, sehr empfindlich. Außerdem läßt sich keine homogene Schichtdicke der HPS-Schicht realisieren, da diese die Elektroden mitüberdeckt. Auch ist eine vergleichsweise große Schichtdicke erforderlich, die bezüglich der Ansprechzeit des Sensors nachteilig ist.

Bei dem vorliegenden optischen Sensor treten die vorgenannten Nachteile nicht auf. Insbesondere ist hierbei unter anderem vorteilhaft, daß durch die vorhandene Intensitätsverteilung des geführten Lichtes der evaneszente Anteil nahezu vollständig innerhalb der HPS-Schicht liegt. Dadurch wirken sich in erwünschter Weise Änderungen innerhalb dieser sensitiven Schicht entsprechend auf das geführte Licht aus, während andererseits dadurch Störeinflüsse weitgehend ausgeschaltet sind.

Einzelheiten der Substanzklasse der Heteropolysiloxane können der DE-OS 35 26 348 entnommen werden.

Eine vorteilhafte praktische Ausführungsform der Erfindung sieht vor, daß sich die Wellenleiter im Oberflächenbereich eines Substrates befinden, daß sie unter Freilassung eines Fensters im sensitiven Bereich außenseitig durch eine dielektrische Zwischenschicht abgedeckt sind und daß die sensitive Schicht aus einem Heteropolysiloxan zumindest im Fensterbereich vorgesehen ist und dort den von der Zwischenschicht freigelassenen Wellenleiterabschnitt überdeckt.

Bei dieser Anordnung bewirkt eine Brechzahländerung der HPS-Schichtin dem sensitiven Bereich, wo die dielektrische Zwischenschicht unterbrochen ist, eine Phasenänderung des geführten Lichtes, die interferometrisch bestimmt werden kann. Neben der Brechzahl liefert dieses integriert-optische Interferometer bei geeigneter Auswertung auch den Absorptionskoeffizienten der sensitiven Beschichtung.

Durch den vergleichsweise einfachen Aufbau dieses optischen Sensors ist dieser gut herstellbar und läßt sich auch an unterschiedliche Anforderungen-Messung von Gasen oder Messung in Flüssigkeiten-anpassen.

Zusätzliche Ausgestaltungen sind in den weiteren Unteransprüchen aufgeführt.

Nachstehend ist die Erfindung mit ihren wesentlichen Einzelheiten anhand der Zeichnungen noch näher erläutert:
Es zeigt:
Fig. 1    eine perspektivische unmaßstäbliche Prinzipdarstellung eines erfindungsgemäßen Sensors,
Fig. 2    einen Querschnitt des in Figur 1 gezeigten Sensors im Bereich seines "Meßfensters",
Fig. 3    die Feldverteilung des geführten Lichtes innerhalb des Sensors und
Fig. 4    eine Blockdarstellung einer Meßanordnung mit erfindungsgemäßem Sensor.

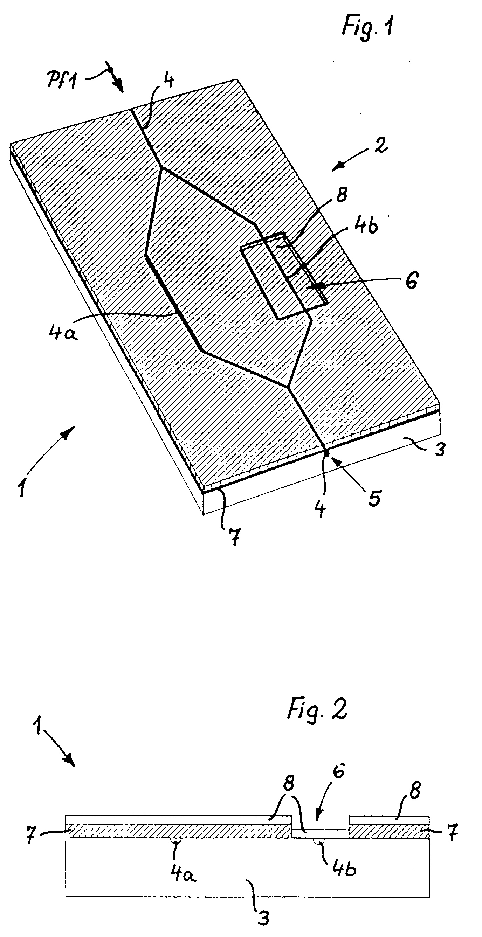

In den Figuren 1 und 2 ist der prinzipielle Aufbau des erfindungsgemäßen optischen Sensors 1 gezeigt, mit dem selektiv die Konzentration eines Stoffes, z.B. $CO_2$ in Luft, erfaßt werden kann. Im Ausführungsbeispiel ist ein Mach-Zehnder-Interferometer 2 dargestellt. Zu beachten ist dabei, daß keine maßstäbliche Darstellung gewählt werden konnte, da die Maßverhältnisse extrem unterschiedlich sind. Insbesondere sind dabei Schichtdicken im Mikrometerbereich vorhanden.

Der Sensor 1 weist als Träger eine Substrat-Schicht 3 aus Glas auf, in deren Oberflächenbereich Streifen-Wellenleiter 4 vorgesehen sind. An einem Ende des bis an die Ränder des Substrates reichenden Wellenleiters 4 wird gemäß dem Pfeil Pf1 in der Regel über lichtleitende Fasern Licht eingekoppelt. Der Wellenleiter 4 ist bei der Ausbildung des Sensor als Mach-Zehnder-Interferometer in zwei Zweige 4a und 4b aufgeteilt und vor einem Austrittsende 5 wieder zusammengeführt.

Im Verlauf des Wellenleiter-Zweiges 4b befindet sich ein sensitiver Bereich 6, in dem durch äußere Einwirkung das im Wellenleiter-Zweig 4b geführte Licht beeinflußt werden kann.

Auf dem Substrat 3 befindet sich eine dielektrische Zwischenschicht 7, die bis auf den sensitiven Bereich 6 die Substratschicht 3 überdeckt.

Zumindest in dem sensitiven Fensterbereich 6 ist nun eine sensitive Schicht 8 aufgebracht, die den von der dielektrischen Zwischenschicht freigelassenen Wellenleiterabschnitt überdeckt.

Diese sensitive Schicht 8 besteht aus einem Heteropolysiloxan. Wie in Figur 1 und 2 erkennbar, ist die sensitive Schicht 8 - im weiteren Verlauf der Beschreibung auch kurz: HPS-Schicht genannt-vollflächig aufgebracht und überdeckt somit den sensitiven Fensterbereich 6 und auch die dielektrische Zwischenschicht 7. Dies ist aus fertigungstechnischen Gründen vorteilhaft.

Das Substrat 3 kann eine Dicke von beispielsweise 2 mm und Kantenlängen von einigen Zentimetern aufweisen. Die Schichtdicke der dielektrischen Zwischenschicht 7 kann beispielsweise ein Mikrometer und die Dicke der HPS-Schicht 8 etwa 100 bis 500 Nanometer betragen.

Bei den für die sensitive Schicht 8 verwendeten Heteropolysiloxanen handelt es sich um organisch modifizierte Silikate. Die Modifizierung erfolgt in erster Linie durch Einbau geeigneter funktioneller organischer Gruppen oder hydrolisierbarer und in einem Silikatnetzwerk kondensierbarer Metallverbindungen.

Durch diese Modifizierung entstehen Oberflächenstellen (Adsorptionszentren), die eine idealerweise selektive Wechselwirkung mit dem nachzuweisenden Stoff ermöglichen.

Die HPS-Schicht ist dabei so präpariert, daß sie den nachzuweisenden Stoff entweder an ihrer Oberfläche anlagert oder in ihrer gesamten Schicht adsorbiert. Die Anlagerung oder Aufnahme der Substanz erfolgt so, daß sich die optischen Eigenschatten, insbesondere die Brechzahl, der optische Absorptionskoeffizient bei der entsprechenden Meßwellenlänge und/oder die Schichtdicke ändern.

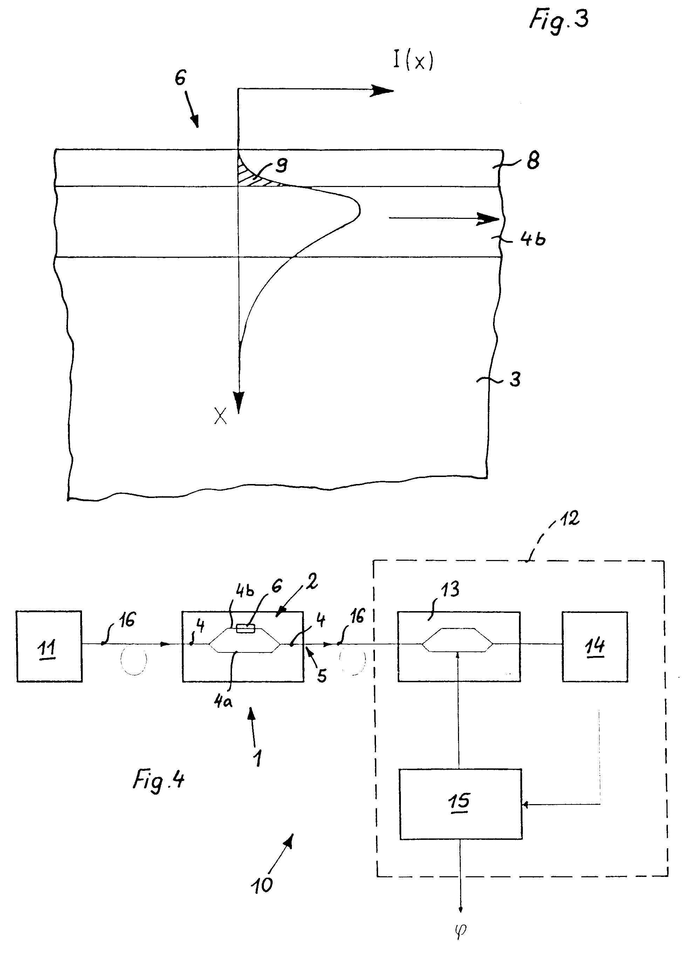

Figur 3 zeigt einen Ausschnitt des sensitiven Bereiches 6 mit der auf dem Wellenleiter 4b befindlichen HPS-Schicht 8 und einem kleinen Schichtabschnitt des Substrates 3.

In diese Schichtanordnung ist ein Diagramm über die Intensitätsverteilung des Lichtes eingezeichnet. Hieraus ist erkennbar, daß sich ein evaneszenter Feldanteil des im Wellenleiter 4b geführten Lichtes in die HPS-Schicht 8 erstreckt. Dieser evaneszente Feldanteil 9 ist durch eine Schraffur gekennzeichnet. Für eine hohe Sensorempfindlichkeit ist angestrebt, daß ein hoher Evaneszentfeldanteil 9 vorhanden ist. Außerdem ist ein an den Wellenleiter 4b angepaßter Brechungsindex der HPS-Schicht 8 vorgesehen. Die Brechungsindexänderung beeinflußt die Phasengeschwindigkeit des geführten Lichts im Wellenleiter-Zweig 4b des Interferometers 2.

Dort wo die beiden Wellenleiter-Zweige 4a, 4b wieder zusammengeführt sind, interferieren die Lichtanteile aus den beiden Leitern, so daß die Phasenänderung in eine Intensitätsänderung umgewandelt wird.

Bei einer Anordnung, wo die Wellenleiter nach ihrem Aufzweigen nicht mehr zusammengeführt werden, kann eine Bestimmung der optischen Absorption der sensitiven Schicht 8 vorgenommen werden. Auch hier wird das eingekoppelte Licht in die zwei Wellenleiter-Zweige aufgeteilt, von denen der einevollständig unter der dielektrischen Deckschicht 7 geführt ist, während bei dem anderen Wellenleiter-Zweig im Bereich des sensitiven Bereiches diese dielektrische Schicht 7 unterbrochen ist. Der Wellenleiter-Zweig ist wie bei dem Interferometer in diesem Bereich mit der Heteropolysiloxan-Schicht 8 in Kontakt. Da das Licht mit seinem evaneszenten Feldanteil 9 außerhalb des Wellenleiters geführt wird, wirkt sich dort eine Änderung des Absorptionskoeffizienten der HPS-Schicht 8 auf die Lichtintensität aus. Im anderen Wellenleiter, der ganz von der dielektrischen Zwischenschicht 7 abgedeckt ist, hängt die Intensität des geführten Lichtes nicht von den Eigenschaffen der HPS-Schicht ab. Der Ausgang dieses Wellenleiters dient zur Bestimmung einer Referenzintensität.

Von Bedeutung ist noch, daß der meßtechnisch relevante Feldanteil des geführten Lichtes innerhalb der HPS-Schicht 8 liegt und daß andererseits aber praktisch kein oder nur ein sehr geringer Anteil über die HPS-Schicht hinausgeht. Dementsprechend ist eine hohe Störsicherheit gegenüber äußeren Störgrößen vorhanden.

Da der sensitive Bereich mit der Substratoberfläche und dem darin befindlichen Wellenleiterzweig 4b eine glatte Oberfläche bildet, lassen sich auch sehr homogene HPS-Schichten aufbringen, so daß Streuverluste vermieden werden. Dies begünstigt ein gutes Signal-Rausch-Verhältnis.
Die HPS-Schicht 8 ist im verwendeten Wellenlängenbereich transparent.

Zur gleichzeitigen Bestimmung mehrerer Komponenten in flüssiger und gasförmiger Phase ist es möglich, mehrere der beschriebenen Sensoren 1 mit unterschiedlicher selektiver Empfindlichkeit für die jeweils zu bestimmende Komponente vorzusehen, gegebenenfalls auf einem gemeinsamen Substrat 3.

Figur 4 zeigt noch eine komplette Meßanordnung 10, die mit einem Interferometer als Sensor 1 arbeitet. Die Meßanordnung 10 besteht im wesentlichen aus einer Lichtquelle 11, dem Sensor 1 sowie einer Auswerteeinheit 12.

Die Auswerteeinheit 12 beinhaltet einen Empfängerchip 13, einen Photodetektor 14 sowie eine Auswerteelektronik 15 mit Phasenmodulator. Die Lichtquelle 11 ist über eine Lichtleitfaser 16 mit dem Sensor 1 verbunden. Der Sensor seinerseits ist mit dem Austrittsende 5 seines Wellenleiters 4 ebenfalls über eine Lichtleitfaser 16 mit der Auswerteeinheit 12 verbunden. Der Sensor 1 bildet hier ein passives Bauelement, das keine elektrischen Zuleitungen benötigt. Somit ist sein Einsatz auch unter Umgebungsbedingungen, wo elektrische Sensoren nicht einsetzbar sind, gut möglich.

In der Auswerteeinheit 12 befindet sich das Empfängerchip 13 mit Phasenmodulator, wobei die Phasenmodulation entweder mittels elektrooptischen Effektes oder zum Beispiel mittels Thermomodulators erfolgt. Außerdem befindet sich in der Auswerteeinheit 12 der Photodetektor 14 zur Wandlung in ein elektrisches Signal und daran angeschlossen die Auswerteelektronik 15. Die Auswertung selbst kann mit verschiedenen bekannten Verfahren vorgenommen werden.

Eine für die erfindungsgemäßen Sensoren besonders bevorzugte Gruppe von Heteropolysiloxanen wird erhalten durch Hydrolyse und Polykondensation von

a) mindestens einem organofunktionellen Silan der allgemeinen Formel I

$$SiR'_b X_c (R''Y)_{(4-b-c)}$$

in der R' Alkyl, Alkenyl, Aryl, Aralkyl oder Alkylaryl bedeutet, X Wasserstoff, Halogen, Alkoxy, Acyloxy oder --NR$_2$ (R = Wasserstoff und/oder Alkyl) darstellt, R'' geradkettiges oder verzweigtes Alkylen, das durch Sauerstoff-oder Schwefelatome oder --NH-- Gruppen unterbrochen sein kann, Phenylen, Alkylphenylen oder Alkylenphenylen darstellt, Y Halogen oder eine gegebenenfalls alkylsubstituierte Amino-, gegebenenfalls alkylsubstituierte Anilino-, Aldehyd-, Alkylcarbonyl-, Arylcarbonyl-, Carboxy-, Hydroxy, Mercapto-, Cyano-, Hydroxyphenyl-, Diazo-, Carbonsäurealkylester-, Sulfonsäure- (SO$_3$H), Phosphorsäure- (PO$_3$H$_2$), Phosphino-, Dialkylphosphino-, Diarylphosphino-, Alkylarylphosphino-, Imidazolino-, 4,5-Dihydroimidazolino-, Pyridino- oder Epoxygruppe bedeutet, b den Wert 0,1 oder 2, c den Wet 1, 2 oder 3 und (b+c) den Wert 1,2 oder 3 haben;

b) gegebenenfalls mindestens einem Organosilan der allgemeinen Formel II

$$SiR'_aX_{(4-a)}$$

in der X und R' die vorstehende Bedeutung haben und a den Wert 1, 2 oder 3 hat;

c) gegebenenfalls mindestens einem im Reaktormedium löslichen schwerflüchtigen Oxid oder mindestens einer im Reaktionsmedium löslichen, ein schwerflüchtiges Oxid bildenden Verbindung eines Elementes der Hauptgruppen Ia bis Va oder der Nebengruppen IVb oder Vb des Periodensystems; und

d) gegebenenfalls mindestens einer im Reaktionsmedium löslichen Metallverbindung, die eine Reaktion des Analyten katalysiert, und/oder einer im Reaktionsmedium löslichen organischen Verbindung, die mit dem Analyten eine chemische Reaktion eingeht;

gegebenenfalls in Gegenwart eines Kondensationskatalysators und/oder eines organischen Lösungsmittels.

Das auf diese Weise hergestellte Heteropolysiloxan enthält vorzugsweise, bezogen auf die Oxideinheiten, 20 bis 100 Gewichtsprozent der Komponente a) und jeweils 0 bis 80 Gewichtsprozent der Komponenten b), c) und/oder d).

Diese und ähnliche Heteropolysiloxane sowie Verfahren zu ihrer Herstellung sind z.B. in den DE-OS 27 58 415 und 29 25 969 beschrieben.

Das zur Herstellung der HPS angewandte Verfahrenwird als Sol-Gel-Prozeß bezeichnet. Ausgehend von flüssigen oder löslichen Ausgangsverbindungen erhält man durch die fortschreitende Kondensation Moleküle und Molekülaggregate mit wachsendem Molekulargewicht. Dies führt zu einer kolloidaldispersen Lösung (Sol), die sich durch weitere Kondensation zu einem amorphen Feststoff (Gel) als primärem Reaktionsprodukt verdichtet. Dieses kann dann gegebenenfalls noch nachbehandelt werden.

Das zur Hydrolyse stöchiometrisch erforderliche Wasser wird entweder zumindest teilweise dem Polykondensationssystem zugegeben oder aber vollständig aus der Luftfeuchtigkeit bezogen. Die Herstellung von sensitiven HPS-Schichten kann auf verschiedene Weise erfolgen. Beispielsweise kann vom Lösungszustand der Ausgangsverbindungen ausgegangen werden, so daß dann der gesamte Sol-Gel-Prozeß in der Schicht abläuft. Auch im Sol-Zustand sind Beschichtungen durchführbar. Schließlich ist bei löslichen Gelen auch eine Auflösung des Produkts in einem organischen Lösungsmittel möglich, das dann als Lösung aufgetragen wird. Bisher wurde mit der Hätte der zur Hydrolyse stöchiometrisch erforderlichen Wassermenge gearbeitet. Es wurden Beschichtungen aus dem Sol-Zustand durchgeführt.

Wie sich bei den bisherigen Arbeiten zeigte, sind für die Anwendung auf optischen Bauelementen sehr geringe Schichtdicken notwendig.

Bezüglich a) haben sich in Versuchen insbesondere Silane des Typs SiX$_3$(R''Y) als vorteilhaft gezeigt. Dazu gehören die Ausgangssilane für die schwefeldioxid-empfindlichen Schichten, bei denen R''Y entweder

-CH$_2$-CH$_2$-CH$_2$-N(CH$_3$)$_2$   oder   -CH$_2$-CH$_2$-CH$_2$-N-(C$_2$H$_5$)$_2$

(Y ist also eine teritäre Aminogruppe) ist, und ein Ausgangssilan für eine kohlendioxid-empfindliche Schicht, bei der R''Y-CH$_2$-CH$_2$-CH$_2$-NH$_2$ (Y ist also eine primäre Aminogruppe) ist. In diesen Fällen ist die Funktion Y tatsächlich das Adsorptionszentrum.

Bei einer NO$_2$- und NH$_3$-empfindlichen Schicht tritt für R''Y-CH$_2$-CH$_2$-CH$_2$-CN auf. Y ist also eine Cyanogruppe, die als Ligand für ein Metallion (Cu$^{2+}$) dient. Dieser Metallkomplex wirkt dann als Adsorptionszentrum für NO$_2$ und NH$_3$.

Der Molekülteil R'' war also bisher immer -CH$_2$-CH$_2$-CH$_2$-, der Molekülteil X warin allen Fällen -OCH$_3$ (X$_3$ : (OCH$_3$)$_3$).

Bei der Modifikation zu b) wurde insbesondere Propyltrimethoxysilan (H$_3$CO)$_3$Si-CH$_2$-CH$_2$-CH$_3$ erfolgreich angewandt, also: R' = -CH$_2$-CH$_2$-CH$_3$; a = 1; X = OCH$_3$, wobei die Hydrophobie der Propylgruppe zur Erniedrigung der Querempfindlichkeit zu Wasser genutzt wurde.

Die hier unter b) beschriebenen Komponenten haben die Aufgabe, Materialeigenschatten zu steuern, die nicht unmittelbar die Adsorption des jeweiligen Gases betreffen. Bei der Verwendung von optischen Bauelementen ist hier insbesondere die Steuerung der Brechzahl wichtig. Dazu könnten Silane verwendet werden, bei denen R' ein Acryl-, Aralkyl- oder Arylalkylrest ist.

Die in c) beschriebenen Komponenten haben in etwa die gleichen Aufgaben wie die unter b) beschriebenen. Bisherige Modifikationen mit Zusätzen von $Ti(OC_2H_5)_4$ oder $Zr(OC_3H_7)_4$ können zur Brechzahlsteuerung vorteilhaft sein.

Die in d) beschriebenen Komponenten betreffen das sogenannte gel entrappment, das heißt den Einbau von Bestandteilen, die nicht überchemische Bindungen an das Polysiloxangerüst gebunden, sondern nur in dieses eingelagert sind. Hier sind auch Metallverbindungen genannt, obwohl diese über koordinative Bindungen an das Siloxangerüst gebunden sein können (siehe das unter zu a) angeführte Kupfer(II)-Ion).

Als organische Verbindung ist bisher das 2-Phenethylhydrazin als Adsorptionszentrum für Kohlendioxid mit Erfolg eingesetzt worden.

Als gesondert zugegebener Kondensationskatalysator wurde bisher Salzsäure eingesetzt. Notwendigerweise wirken aber alle an Silane gebundenen Aminogruppen und andere basische Bestandteile genauso.

Bei der Präparation aller bisher erfolgreichen Materialien wurde Methanol als Lösungsmittel eingesetzt. Der Grund dafür ist, daß nur ein- und derselbe Alkohol als Lösungsmittel und als Alkoxyrest der zu kondensierenden Silane auftreten darf, um unerwünschte Umalkoholisierungen zu vermeiden. Diese führen zu einem nicht mehr durchschaubaren Reaktionsablauf und zu undefinierten Endprodukten.

## Patentansprüche

1. Optischer Sensor für flüssige oder gasförmige Medien mit einer integriert optischen Anordnung zur Messung des optischen Absorptionskoeffizienten und der Brechzahl, wobei die Anordnung einen oder mehrere Wellenleiter sowie zumindest im Bereich eines Wellenleiters eine mit dem zu untersuchenden Stoff in Verbindung bringbare sensitive Schicht aufweist und insbesondere durch ein Interferometer gebildet ist,

**dadurch gekennzeichnet,**

daß die sensitive Schicht (8) aus der Substanzklasse der Heteropolysiloxane (HPS) ist und zur Konzentrationsmessung von Komponenten in Gasen oder Flüssigkeiten vorgesehen ist und daß durch gezielte Auswahl der sensitiven Schicht aus dieser Substanzklasse jeweils eine bestimmte Stoffkomponente bestimmbar ist.

2. Optischer Sensor nach Anspruch 1,

**dadurch gekennzeichnet,**

daß sich die Wellenleiter im Oberflächenbereich eines Substrates (3) befinden, daß sie unter Freilassung eines Fensters im sensitiven Bereich (6) außenseitig durch eine dielektrische Zwischenschicht (7) abgedeckt sind und daß die sensitive Schicht (8) aus einem Heteropolysiloxan zumindest im Fensterbereich vorgesehen ist und dort den von der Zwischenschicht freigelassenen Wellenleiterabschnitt (4b) überdeckt.

3. Optischer Sensor nach Anspruch 1 oder 2,

**dadurch gekennzeichnet,**

daß das Heteropolysiloxan hergestellt worden ist durch Hydrolyse und Kondensation von
a) mindestens einem organofunktionellen Silan der allgemeinen Formel I

$SiR'_bX_c(R''Y)(4-b-c)$

in der R' Alkyl, Alkenyl, Aryl, Aralkyl oder Alkylaryl bedeutet, X Wasserstoff, Halogen, Alkoxy, Acyloxy oder $-NR_2$ (R = Wasserstoff und/oder Alkyl) darstellt, R'' geradkettiges oder verzweigtes Alkylen, das durch Sauerstoff- oder Schwefelatome oder -NH-Gruppen unterbrochen sein kann, Phenylen, Alkylphenylen oder Alkylenphenylen darstellt, Y Halogen oder eine gegebenenfalls alkylsubstituierte Amino-, gegebenenfalls alkylsubstituierte Anilino-, Aldehyd-, Alkylcarbonyl-, Arylcarbonyl-, Carboxy-, Hydroxy-, Mercapto-, Cyano-, Hydroxyphenyl-, Diazo-, Carbonsäurealkylester-, Sulfonsäure- $(SO_3H)$, Phosphorsäure- $(PO_3H_2)$, Phosphino-, Dialkylphosphino-, Diarylphosphino-, Alkylarylphosphino-, Imidazolino-, 4,5-Dihydroimidazolino-, Pyridino- oder Epoxygruppe bedeutet, b den Wert 0, 1 oder 2, c den Wert 1, 2 oder 3 und (b + c) den Wert 1, 2 oder 3 haben;
b) gegebenenfalls mindestens einem Organosilan der allgemeinen Formel II

$SiR'_aX_{(4-a)}$

in der X und R' die vorstehende Bedeutung haben und a den Wert 1, 2 oder 3 hat;
c) gegebenenfalls mindestens einem im Reaktionsmedium löslichen schwerflüchtigen Oxid oder mindestens einer im Reaktionsmedium löslichen, ein schwerflüchtiges Oxid bildenden Verbindung eines Elementes der Hauptgruppen Ia bis Va oder der Nebengruppen IVb oder Vb des Periodensystems und

d) gegebenenfalls mindestens einer im Reaktionsmedium löslichen Metallverbindung, die eine Reaktion des Analyten katalysiert, und/oder einer im Reaktionsmedium löslichen organischen Verbindung, die mit dem Analyten eine chemische Reaktion eingeht; gegebenenfalls in Gegenwart eines Kondensationskatalysators und/oder eines organischen Lösungsmittels.

4. Optischer Sensor nach Anspruch 3,

   **dadurch gekennzeichnet**,

   daß das Heteropolysiloxan, bezogen auf die Oxideinheiten, 20 bis 100 Gewichtsprozent der Komponente a) und jeweils 0 bis 80 Gewichtsprozent der Komponenten b), c) und/oder d) enthält.

5. Optischer Sensor zur gleichzeitigen Bestimmung mehrerer Komponenten in flüssiger und gasförmiger Phase,

   **dadurch gekennzeichnet**,

   daß mehrere Sensoren nach einem der Ansprüche 1 bis 4 mit unterschiedlicher selektiver Empfindlichkeit für die jeweils zu bestimmenden Komponenten vorgesehen sind, gegebenenfalls auf einem gemeinsamen Substrat (3).

6. Optischer Sensor nach einem der Ansprüche 1 bis 5,

   **dadurch gekennzeichnet**,

   daß die sensitive Schicht (8) im verwendeten Wellenlängenbereich transparent ist.

7. Optischer Sensor nach einem der Ansprüche 1 bis 6,

   **dadurch gekennzeichnet**,

   daß ein evaneszenter Feldanteil (9) des im Wellenleiter (4b) geführten Lichtes sich in die sensitive Schicht (8) erstreckt.

8. Optischer Sensor nach einem der Ansprüche 1 bis 7,

   **dadurch gekennzeichnet**,

daß ein Wellenleiter (4b) bzw. eine lichtleitende Schicht die sensitive Schicht (8) bildet und aus einem Heteropolysiloxan besteht.

9. Optischer Sensor nach einem der Ansprüche 1 bis 8,

   **dadurch gekennzeichnet**,

   daß die sensitive Schicht (8) als dünner Film mit gleichmäßiger Schichtdicke ausgebildet ist und daß die Schichtdicke etwa 0,1 bis 0,5 Mikrometer beträgt.

10. Optischer Sensor nach einem der Ansprüche 1 bis 9,

    **dadurch gekennzeichnet**,

    daß der Sensor über eine Lichtleitfaser mit einer Auswerteeinheit (12) und gegebenenfalls über eine weitere Lichtleitfaser andererseits mit einer Lichtquelle (11) verbunden ist.

Fig. 1

Fig. 2

Fig.3

$I(x)$

Fig.4